Europäisches Patentamt

(19) European Patent Office

Office européen des brevets

(11) Publication number: **0 288 178 B1**

(12) **EUROPEAN PATENT SPECIFICATION**

(45) Date of publication of patent specification:
30.10.91 Bulletin 91/44

(21) Application number: **88303051.2**

(22) Date of filing: **06.04.88**

(51) Int. Cl.⁵: **B65G 47/26, A21B 3/07**

(54) Aligning and spacing articles.

(30) Priority: **08.04.87 GB 8708368**

(43) Date of publication of application:
**26.10.88 Bulletin 88/43**

(45) Publication of the grant of the patent:
**30.10.91 Bulletin 91/44**

(84) Designated Contracting States:
**AT BE CH DE ES FR GB GR IT LI LU NL SE**

(56) References cited:
**DE-A- 3 012 289**
**DE-A- 3 144 449**
**GB-A- 2 112 728**

(56) References cited:
**US-A- 4 609 095**
**Soviet Inventions Illustrated, section Ch, week E 09, April 14, 1982, Derwent Publications Ltd. London, D11**

(73) Proprietor: **TWEEDY OF BURNLEY LIMITED**
**Peel Mill Gannow Lane**
**Burnley BB12 6JL Lancashire (GB)**

(72) Inventor: **Morley, Gary**
**11 Stirling Court Briercliffe**
**Burnley Lancashire (GB)**

(74) Representative: **Sherrard-Smith, Hugh et al**
**Appleyard, Lees & Co. 15 Clare Road**
**Halifax, HX1 2HY West Yorkshire (GB)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a method of and apparatus for aligning and spacing articles on a conveyor. The invention is particularly, although not exclusively applicable to the alignment and spacing of pans or tins containing farinaceous material.

In a bakery, the pans or tins may lie on the conveyor at angles and may abut each other. The pans may touch each other and come off or jam the conveyor as the conveyor travels around bends, thus necessitating shut down of the line until the blockage is cleared, with loss of production time and possible loss of at least part of the production run.

It has previously been proposed to check the spacing between adjacent pans by means of a photo electric beam and to give an alarm if the spacing is below a predetermined value. However, as the spacing and the alarm are related to the time which the photo electric beam detects a gap, no account is taken of the greater gap which may be present if the conveyor is moving at a faster speed, and an alarm may thus be given even if the spacing is sufficient because the beam only detects a gap for a short period of time. Furthermore, no provision is made for the straightening out of the pans, which may be oblong, so that their longer axis extends perpendicularly to the direction of travel. This orientation of the pans is the most favourable as it permits the gap between pans to be less than if the pans are at another angle on the conveyor whilst avoiding fouling of successive pans as they subsequently pass around the bends of the conveyor.

There is shown in G.B. Patent Publication No. A-2112728 a method of spacing a succession of articles along a conveyor comprising using stop means movable between a first position in which articles approaching the stop means along the conveyor are prevented from passing the stop means and a second position in which articles are able to pass the stop means.

According to one aspect of the present invention, a method of spacing a succession of articles along a conveyor comprising using stop means movable between a first position in which articles approaching the stop means along the conveyor are prevented from passing the stop means and a second position in which articles are able to pass the stop means is characterised in that the method further comprises correctly aligning articles if the articles are not correctly aligned on the conveyor with respect to the direction of travel of the conveyor by the sequence of placing the stop means in the first position, turning an article which abuts the stop means into a correct alignment position by movement of the conveyor, the article thereby fully settling against the stop means, and moving the stop means to the second position after an article has abutted the stop means and after the article has become correctly aligned and then returning the stop means to the first position once an article is clear of the stop means.

The method may comprise always moving the stop means to the second position after an article has abutted the stop means. The method may further comprise using the movement of the stop means from the first position to the second position to control the spacing between successive articles.

The method may further comprise detecting when an article is correctly aligned on the conveyor when it abuts the stop means.

The method may also comprise sensing when an article is clear of the stop means.

The method may comprise using upstream stop means spaced from the stop means (now referred to as the downstream stop means), the upstream stop means also being movable between the first and second positions, the method comprising the sequence of sensing when an article abuts and is correctly aligned with the downstream stop means in the first position and moving the upstream stop means to the first position, moving the downstream stop means to the second position and moving the upstream stop means to the second position and then moving the downstream stop means to the first position once the article is clear of the downstream stop means.

According to another aspect of the present invention, apparatus for spacing a succession of articles along a conveyor according to a method as herein referred to includes stop means movable between a first position in which, in use, articles approaching the stop means are prevented from passing the stop means and a second position in which, in use, articles are able to pass the stop means is characterised in that the arrangement is also for aligning a succession of articles whereby, in use, if an article is not correctly aligned on the conveyor with respect to the direction of travel of the conveyor, the stop means are arranged to move from the first position to the second position after an article has abutted the stop means and after the article has become correctly aligned, the stop means, in use, further being arranged to return to the first position once an article is clear of the stop means.

Sensing means may be provided arranged to sense when an article is clear of the stop means.

Detection means may be provided to detect when an article is correctly aligned on the conveyor when it abuts the stop means.

Upstream stop means may be provided spaced from the stop means (now referred to as the downstream stop means) movable between the first and second positions.

The invention may be carried into practice in various ways, but one embodiment will now be described by way of example and with reference to the accompanying diagrams in which :

Figure 1 is a schematic plan view of part of a conveyor incorporating an alignment and spacing arrangement, and

Figure 2 is a schematic side view of a pair of tins showing the location of stops in relation to successive tins.

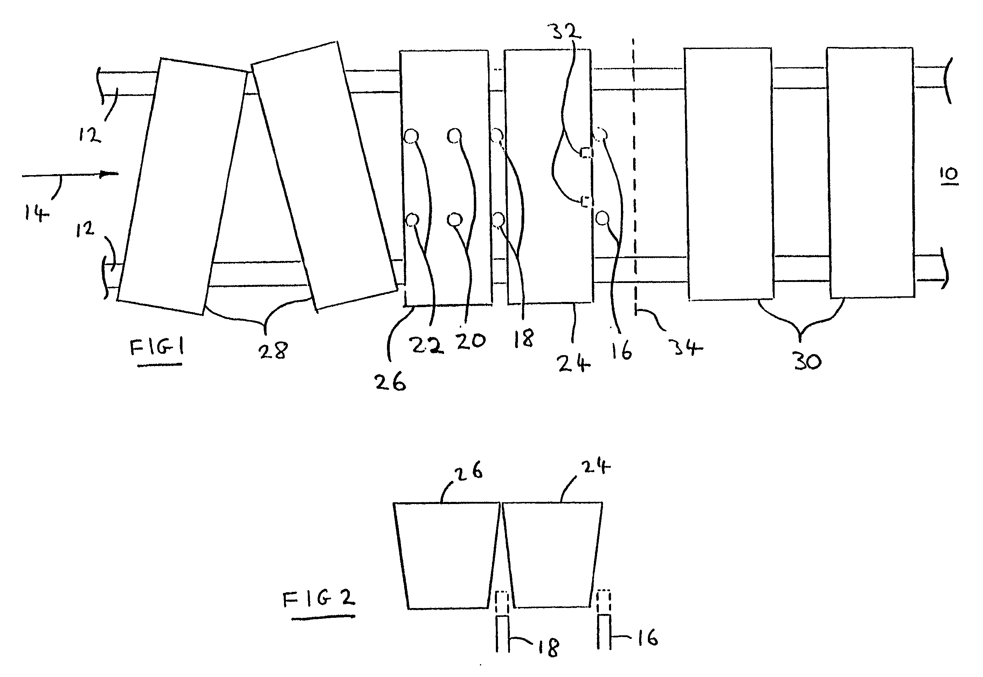

As shown in Figure 1, a conveyor 10 is driven by two spaced chains 12 in the direction of the arrow 14.

A pair of front stops 16 are provided which cooperate with one of the three pairs of rear stops 18, 20 or 22 in dependence upon the size of the tins to be aligned and spaced. For the purposes of illustrating the present invention reference will be made to the stops 18, but it will be appreciated that the operation of the stops 20 or 22 occurs in a similar manner.

The stops 16 and 18, can occupy a raised position, shown in phantom lines in Figure 2, or a lowered position, shown in solid lines in that figure. In the raised position the tins 24 or 26 approaching the relevant stops are prevented from moving with the conveyor by abutment with the stops.

The tins 24 and 26 are rectangular in plan view with their longitudinal axis extending transversely to the direction of travel. The tins approach the stops at different angles and spacing, as indicated by the outline of further upstream tins 28. The tins leave the stops 16 with their longitudinal axis extending generally perpendicular to the direction of travel and with a predetermined minimum distance between the tins, as indicated by the outline of the tins 30.

The stops 18 determine the minimum gaps between the tins leaving the arrangement, and the stops 16 align those tins in the manner described below.

When no tins have approached the arrangement for a significant length of time, the stops 18 are in the lowered position and the stops 16 are in the raised position. The first tin 24 to approach the arrangement abuts one or both of the front stops 16. If the longitudinal axis is at an angle other than perpendicular to the direction of travel (as with the tins 28) then the forward edge will contact one of the stops 16 with the conveyor pulling the tin around until the tin is correctly aligned and both of the stops 16 are contacted by the forward edge. When, or just before the front edge abuts both of the stops 16 a pair of spaced proximity switches 32 located just in front of the stops 16 both sense the presence of a tin by both being able to conduct and a timer is set to move the stops 16 to the lowered position after a short period of time, for instance 0.5 seconds, to allow time for the tin to settle against the stops 16.

When the stops 16 are moved to the lowered position, the stops 18 simultaneously move to the raised position to prevent the next tin 26 from advancing immediately. As can be seen from Figure 2, the width of the tins are tapered inwardly and downwardly, and as the stops 18 are thinner than the gap between the tins at their lower region, and as the gap between the front and rear stops is equal to the width of the tins, the rear stops 18 cannot hit a tin located over the stops 18.

At the same time that the stops 18 are moved to the raised position a count, whose counting rate is related to the speed of the conveyor, is commenced. When the count reaches a predetermined value, which corresponds to the minimum gap required between tins, the stops 18 are moved to the lowered position. If a tin is already present at the stops 18 then this moves forward. If not, then the next tin approaches the stops 16 unhindered, after passing over the lowered stops 18.

Whilst the stops 18 are in the raised position and the count is being made, the stops 16 are returned to the raised position as detailed below, in order that the next tin passing over the stops 18 can come to rest against the stops 16.

Once a tin has been released by the stops 16, those stops 16 must not return to the raised position until the base of the tin is clear of the stops. To this end a photoelectric cell 34 is provided adjacent to, and downstream of the stops 16, and when the advancing tin clears that cell 34 the stops 16 are returned to the raised position.

The stops 20 are used in place of the stops 18 when the width of a tin corresponds to the distance between the stops 20 and 16, and the stops 22 are used when the width of a tray corresponds to the distance between the stops 22 and 16. The stops 18, 20 or 22 are selected by a rotary switch.

The pulses for the count are derived from a sprocket on the main jackshaft of the conveyor and accordingly are directly proportional to the speed of the conveyor. In the illustrated embodiment the predetermined count for releasing the stops 18 is arranged to provide a minimum gap of 3.5 inches between the tins. It will be appreciated that the minimum gap between the tins can be automatically adjusted when another pair of stops are chosen, or the gap can be adjusted separately.

## Claims

1. A method of spacing a succession of articles along a conveyor (10) comprising using stop means (18, 20, 22) movable between a first position in which articles (24, 26, 28) approaching the stop means (18, 20, 22) along the conveyor (10) are prevented from passing the stop means (18, 20, 22) and a second position in which articles (24, 26, 28) are able to pass the stop means (18, 20, 22) characterised in that the method further comprises correctly aligning articles (28) if the articles (28) are not correctly aligned on the conveyor (10) with respect to the direction of travel of the conveyor (10) by the sequence of placing the stop means (16) in the first position, turning an article (28) which abuts the stop means (16) into a correct alignment position by movement of the conveyor (10), the article (24) thereby fully settling against the stop means (16), and moving the stop means (16) to the second position after an article (24) has abutted the stop means (16) and after the article (24) has become correctly aligned and then returning the stop means (16) to the first position once an article is clear of the stop means (16) whilst the conveyor (10) is moving.

2. A method as claimed in Claim 1 comprising always moving the stop means (16) to the second position after an article (24, 26, 28) has abutted the stop means.

3. A method as claimed in Claim 1 or Claim 2 comprising using the movement of the stop means (18, 20, 22) from the first position to the second position to control the spacing between successive articles.

4. A method as claimed in any preceding claim comprising detecting (32) when an article (24) is correctly aligned on the conveyor (10) when it abuts the stop means (16).

5. A method as claimed in any preceding claim comprising sensing (34) when an article (30) is clear of the stop means (16).

6. A method as claimed in any preceding claim in which the stop means comprises upstream stop means (18, 20, 22) spaced from downstream stop means, the method comprising the sequence of sensing when an article (24) abuts and is correctly aligned with the downstream stop means (16) in the first position and moving the upstream stop means (18, 20, 22) to the first position, moving the downstream stop means (16) to the second position and moving the upstream stop means (18, 20, 22) to the second position and then moving the downstream stop means (16) to the first position once the article (30) is clear of the downstream stop means (16).

7. Apparatus for spacing a succession of articles (24, 26, 28) along a conveyor (10) according to any one of the methods of the Claims 1 to 6, the apparatus including stop means (16) movable between a first position in which, in use, articles (24, 26, 28) approaching the stop means (16) are prevented from passing the stop means (16) and a second position in which, in use, articles (24, 26, 28) are able to pass the stop means (16), characterised in that the arrangement is also for aligning a succession of articles (24, 26, 28) whereby, in use, if an article (28) is not correctly aligned on the conveyor (10), with respect to the direction of travel of the conveyor, the stop means (16) are arranged to move from the first position to the second position after an article (24) has abutted the stop means (16) and after the article (24) has become correctly aligned, the stop means (16), in use, further being arranged to return to the first position once an article (30) is clear of the stop means (16).

8. Apparatus as claimed in Claim 7 including sensing means (34) arranged to sense when an article (30) is clear of the stop means (16).

9. Apparatus as claimed in Claim 7 or 8 including detection means (34) arranged to detect when an article (24) is correctly aligned on the conveyor (10) when it abuts the stop means (16).

10. Apparatus as claimed in any of Claims 7 to 9 including upstream stop means (18, 20, 22) spaced from the stop means (16) previously referred to (now referred to as the downstream stop means (16) movable between the first and second positions.

**Patentansprüche**

1. Ein Verfahren zum Anordnen einer Aufeinanderfolge von Gegenständen im Abstand längs eines Förderers (10), unter Verwendung einer Stopeinrichtung (18, 20, 22), die bewegbar zwischen einer ersten Position, in welcher sich längs des Förderers (10) an die Stopeinrichtung (18, 20, 22) annähernde Gegenstände am Passieren der Stopeinrichtung (18, 20, 22) gehindert werden, und einer zweiten Position, in welcher Gegenstände (24, 26, 28) in der Lage sind, die Stopeinrichtung (18, 20, 22) zu passieren, **dadurch gekennzeichnet,** daß das Verfahren ferner die korrekte Ausrichtung der Gegenstände (28), wenn die Gegenstände (28) nicht korrekt auf dem Förderer (10) in bezug auf die Bewegungsrichtung des Förderers (10) ausgerichtet sind, durch die Sequenz der Anordnung der Stopeinrichtung (16) in der ersten Position, Drehen eines Gegenstandes (28), welcher gegen die Stopeinrichtung (16) anliegt, in eine korrekte Ausrichtungsposition durch Bewegung des Förderers (10), wodurch der Gegenstand (24) vollständig gegen die Stopeinrichtung (16) zur Anlage kommt, und Bewegen der Stopeinrichtung (16) in die zweite Position, nachdem ein Gegenstand (24) an die Stopeinrichtung (16) angestoßen hat und nachdem der Gegenstand (24) korrekt ausgerichtet worden ist, und dann das Zurückbringen der Stopeinrichtung (16) in die erste Position, wenn ein Gegenstand einmal von der Stopeinrichtung (16) weggeräumt ist, währenddessen das Förderband (10) sich bewegt, umfaßt.

2. Ein Verfahren nach Anspruch 1, welches stets die Bewegung der Stopeinrichtung (16) in die zweite Position, nachdem ein Gegenstand (24, 26, 28) an die Stopeinrichtung angestoßen ist, umfaßt.

3. Ein Verfahren nach Anspruch 1 oder 2, welches die Verwendung der Bewegung der Stopeinrichtung (18, 20, 22) aus der ersten Position zu der zweiten Position, um den Abstand zwischen aufeinanderfolgenden Gegenständen zu steuern, umfaßt.

4. Ein Verfahren nach wenigstens einem der vorhergehenden Ansprüche, welches das Nachweisen (32) umfaßt, daß ein Gegenstand (24) korrekt auf dem Förderer (10) ausgerichtet ist, wenn er an die Stopeinrichtung (16) anstößt.

5. Ein Verfahren nach wenigstens einem der vorhergehenden Ansprüche, welches das Abfühlen, daß ein Gegenstand (30) von der Stopeinrichtung weggeräumt ist, umfaßt.

6. Ein Verfahren nach wenigstens einem der vorhergehenden Ansprüche, bei welchem die Stopeinrichtung eine stromaufwärts gelegene Stopeinrichtung (18, 20, 22) beabstandet von einer stromabwärts gelegenen Stopeinrichtung umfaßt, wobei das Verfahren die Aufeinanderfolge des Abfühlens, wenn ein Gegenstand (24) anstößt und korrekt mit der stromabwärts gelegenen Stopeinrichtung (16) in der ersten Position ausgerichtet ist und Bewegen der stromabwärts gelegenen Stopeinrichtung (18, 20, 22) in die erste Position, Bewegen der stromabwärts gelegenen Stopeinrichtung (16) in die zweite Position und Bewegen der stromaufwärts gelegenen Stopeinrichtung (18, 20, 22) in die zweite Position und dann das Bewegen der stromabwärts gelegenen Stopeinrichtung (16) in die erste Position, wenn der Gegenstand (30) von der stromabwärts gelegenen Stopeinrichtung (16) einmal weggeräumt ist, umfaßt.

7. Vorrichtung zum Anordnen einer Aufeinanderfolge von Gegenständen (24, 26, 28) im Abstand entlang eines Förderers (10) nach wenigstens einem der Verfahren der Ansprüche 1 bis 6, wobei die Vorrichtung eine Stopeinrichtung (16) enthält, die zwischen einer ersten Position, in welcher, im Betrieb, sich der Stopeinrichtung (16) nähernde Gegenstände (24, 26, 28) am Passieren der Stopeinrichtung (16) gehindert werden, und einer zweiten Position, in welcher, im Betrieb, die Gegenstände (24, 26, 28) in der Lage sind, die Stopeinrichtung (16) zu passieren, **dadurch gekennzeichnet**, daß die Anordnung auch zur Ausrichtung einer Aufeinanderfolge von Gegenständen (24, 26, 28) vorgesehen ist, wobei, im Betrieb, wenn ein Gegenstand (28) nicht korrekt auf dem Förderer (10) in bezug auf die Bewegungsrichtung des Förderers ausgerichtet ist, die Stopeinrichtung (16) dazu vorgesehen ist, sich von der ersten Position in die zweite Position zu bewegen, nachdem ein Gegenstand (24) an die Stopeinrichtung (16) angestoßen ist und nachdem der Gegenstand (24) korrekt ausgerichtet worden ist, wobei die Stopeinrichtung (16), im Betrieb, ferner dazu vorgesehen ist, in die erste Position zurückzukehren, wenn einmal ein Gegenstand (30) von der Stoßeinrichtung (16) weggeräumt ist.

8. Eine Vorrichtung nach Anspruch 7, welche eine Sensoreinrichtung (34) enthält, die dazu vorgesehen ist, zu ermitteln, daß ein Gegenstand (30) von der Stoßeinrichtung (16) entfernt ist.

9. Vorrichtung nach Anspruch 7 oder 8, welche eine Detektoreinrichtung (32) enthält, die dazu vorgesehen ist, zu erfassen, daß die in Gegenstand (24) korrekt auf dem Förderer (10) ausgerichtet ist, wenn er gegen die Stopeinrichtung (16) anstößt.

10. Vorrichtung nach wenigstens einem der Ansprüche 7 bis 9, welche eine stromaufwärts gelegene Stopeinrichtung (18, 20, 22) im Abstand von der vorher erwähnten Stopeinrichtung (16) (nun als die zwischen der ersten und der zweiten Position bewegbare stromabwärts gelegene Stopeinrichtung (16) bezeichnet) enthält.

## Revendications

1. Méthode d'espacement d'une succession d'objets le long d'un convoyeur (10), consistant à utiliser des moyens d'arrêt (18, 20, 22) mobiles entre une première position, dans laquelle les objets (24, 26, 28) s'approchant desdits moyens d'arrêt (18, 20, 22), le long du convoyeur (10), ne peuvent pas franchir ceux-ci, et une seconde position, dans laquelle les objets (24, 26, 28) sont aptes à les franchir, caractérisée en ce que la méthode consiste également à aligner correctement les objets (28) s'ils ne sont pas correctement alignés sur le convoyeur (10) par rapport au sens de déplacement de celui-ci, grâce à la séquence d'opérations qui consiste à placer les moyens d'arrêt (16) dans la première position, à tourner un objet (28) butant contre les moyens d'arrêt (16) dans une position d'alignement correcte grâce au mouvement du convoyeur (10), l'objet (24) se calant ainsi complètement contre les moyens d'arrêt (16), à faire passer lesdits moyens d'arrêt (16) dans la seconde position après qu'un objet (24) a buté contre eux et s'est aligné correctement, et à faire revenir ensuite les moyens d'arrêt (16) à la première position une fois qu'un objet est éloigné des moyens d'arrêt (16) tandis que le convoyeur (10) se déplace.

2. Méthode telle que revendiquée dans la revendication 1, consistant à toujours amener les moyens d'arrêt (16) dans la seconde position après qu'un objet (24, 26, 28) a buté contre les moyens d'arrêt.

3. Méthode telle que revendiquée dans la revendication 1 ou 2, consistant à utiliser le passage des moyens d'arrêt (18, 20, 22) de la première à la seconde position en vue d'une régulation de l'écartement entre les objets successifs.

4. Méthode telle que revendiquée dans l'une quelconque des revendication précédentes, consistant à détecter (32) le moment où un objet (24) est correctement aligné sur le convoyeur (10) lorsqu'il bute contre les moyens d'arrêt (16).

5. Méthode telle que revendiquée dans l'une quelconque des revendications précédentes, consistant à détecter (34) le moment où un objet (30) est éloigné des moyens d'arrêt (16).

6. Méthode telle que revendiquée dans l'une quelconque des revendications, suivant laquelle les moyens d'arrêt comportent des moyens d'arrêt amont (28, 20, 22) espacés des moyens d'arrêt aval, la méthode comportant la séquence d'opérations qui consiste à détecter le moment où un objet (24) bute contre les moyens d'arrêt aval (16) dans la première position et est correctement aligné avec eux, et à faire passer les moyens d'arrêt amont (18, 20, 22) dans la première position, à faire passer les moyens d'arrêt aval (16) dans la seconde position et à faire passer les moyens d'arrêt amont (18, 20, 22) dans la seconde position, puis à faire passer les moyens d'arrêt aval (16) dans la première position une fois que l'objet (30) est éloigné de ceux-ci.

7. Appareil pour espacer une succession d'objets (24, 26, 28) le long d'un convoyeur (10) selon l'une quelconque des méthodes des revendications 1 à 6, l'appareil comprenant des moyens d'arrêt (16) mobiles entre une première position, dans laquelle, pendant l'utilisation, des objets (24, 26, 28) s'approchant desdits moyens d'arrêt (16) ne peuvent pas franchir ceux-ci, et une seconde position, dans laquelle, pendant l'utilisation, des objets (24, 26, 28) sont aptes à les franchir, caractérisé en ce que le dispositif est également conçu pour aligner une succession d'objets (24, 26, 28), étant précisé que, pendant l'utilisation, si un objet (28) n'est pas correctement aligné sur le convoyeur (10) par rapport au sens de déplacement de celui-ci, les moyens d'arrêt (16) sont disposés pour passer de la première position à la seconde position après qu'un objet (24) a buté contre eux et après que ledit objet (24) s'est correctement aligné, lesdits moyens d'arrêt (16), pendant l'utilisation, étant par ailleurs disposés pour revenir à la première position une fois qu'un objet (30) est éloigné des moyens d'arrêt (16).

8. Appareil tel que revendiqué dans la revendication 7, comprenant des moyens détecteurs (34) disposés pour détecter le moment où un objet (30) est éloigné des moyens d'arrêt (16).

9. Appareil tel que revendiqué dans la revendication 7 ou 8, comprenant des moyens de détection (32) disposés pour détecter le moment où un objet (24) est correctement aligné sur le convoyeur (10) lorsqu'il bute contre les moyens d'arrêt (16).

10. Appareil tel que revendiqué dans l'une quelconque des revendications 7 à 9, comprenant des moyens d'arrêt amont (18, 20, 22) espacés des moyens d'arrêt (16) mentionnés précédemment (et désignés maintenant sous le terme de moyens d'arrêt aval (16)) et mobiles entre les première et seconde positions.

FIG 1

FIG 2